# EUROPÄISCHE PATENTANMELDUNG

(11) **EP 1 443 141 A1**
(43) Veröffentlichungstag der Anmeldung: **04.08.2004**
(21) Anmeldenummer: 03002206.5
(22) Anmeldetag: 31.01.2003
(51) Int. Cl.: D06M 15/39, D06M 15/41, D06P 1/56, D06P 5/08, C08G 8/04, D06L 3/10, C08G 8/28

(54) **Nichtvergilbende Aldehydkondensationsprodukte**

(71) Anmelder: CLARIANT INTERNATIONAL LTD., 4132 Muttenz (CH)
(72) Erfinder: Die Erfindernennung liegt noch nicht vor

(57) **Zusammenfassung**

Vor dem Vergilben geschütztes schmutzabweisenden Fixier- und Ausrüstungsmittel das ein gegebenenfalls durch Sulfonierung löslich gemachtes Aldehydkondensationsprodukt mit hydroxygruppenhaltigem aromatischem Grundkörper und ein stabilisierendes Reduktionsmittel enthält.

## Beschreibung

Die Erfindung betrifft ein vor dem Vergilben geschütztes, beim Färben oder optischen Aufhellen von stickstoffhaltigen Fasermaterialien hervorragend fixierendes Färbehilfsinittel, das ein gegebenenfalls durch Sulfonierung löslich gemachtes Aldehydkondensationsprodukt mit hydroxygruppenhaltigem aromatischem Grundkörper und ein stabilisierendes Reduktionsmittel enthält.

Die Erfindung betrifft weiter ein vor dem Vergilben geschütztes, schmutzabweisendes Ausrüstungsmittel, das ein gegebenenfalls durch Sulfonierung löslich gemachtes Aldehydkondensationsprodukt mit hydroxygruppenhaltigem aromatischem Grundkörper und ein stabilisierendes Reduktionsmittel enthält.

Beim Färben oder optischen Aufhellen von stickstoffhaltigen Fasermaterialien wie natürlichen oder synthetischen Polyamidfasermaterialien (wie zum Beispiel Wolle und/oder Polyamiden insbesondere Polyamid-Mikrofasern) verbessert das Fixieren die Echtheiten der Färbungen und Drucke.

Nachteilig bei Aldehydkondensationsprodukt als Fixiermittel ist die Vergilbung der gefärbeten Ware, bzw. dass das Fixiermittel schon vor der Verwendung vergilbt.

Textilien, insbesondere textile Beläge aus natürlichen oder synthetischen Polyamidfasermaterialien (wie zum Beispiel Wolle und/oder Polyamiden) werden zur Gebrauchswertsteigerung schmutzabweisen und säurefarbstoffabweisend ausgerüstet. Kaffee, Senf, Rotwein und die sogenannten Soft-Drinks (nichtalkoholhaltige Getränke, die oft natürliche oder synthetische Säurefabstoffe respektive anionische Farbstoffe enthalten, wie zum Beispiel Getränke enthaltend C.I. Food Red 17) können durch dauerhaftes Anfärben die genannten Textilien ruinieren. Während die schmutzabweisenden Eigenschaften durch das Aufbringen von fluorierten Harzen erzeugt werden können, kann die die abweisende Eigenschaft gegenüber natürlichen oder synthetischen Säurefabstoffen respektive anionischen Farbstoffen durch das Aufbringen von gegebenfalls durch Sulfonierung löslich gemachte Aldehydkondensationsprodukte aromatischer Grundkörper erreicht werden.

Nachteilig bei dieser Art der schmutzabweisenden Ausrüstung mit Aldehydkondensationsprodukten von natürlichen oder synthetischen Polyamidfasermaterialien ist eine störende Erscheinung die Vergilbung der Ausrüstung, besonders bei der Verwendung von schmutzabweisenden Ausrüstungsmitteln die für die Abweisung von Feuchtanschmutzung eingesetzt werden, so dass die Färbungen, Aufhellungen und/oder Farbmuster im Farbton auf unerwünschte Weise verändert werden.

Es ist demnach die Aufgabe der Erfindung, ein Fixiermittel bereitzustellen, das diese Nachteile nicht hat, d.h. nicht oder kaum merklich vergilbt. Es ist eine weitere Aufgabe der Erfindung, ein Fixiermittel bereitzustellen, das dem behandelten Substrat zusätzlich schmutzabweisende Eigenschaften verleiht und nicht oder kaum merklich vergilbt. Eine weiter Aufgabe besteht darin, ein Ausrüstungsmittel zur schmutzabweisenden Ausrüstung bereitzustellen, das nicht oder kaum merklich vergilbt.

Es wurde nun gefunden, dass die erfindungsgemässen Zusammensetzungen nicht oder nicht so schnell vergilben, wenn das Färbereihilfsmittel neben einem ein gegebenenfalls durch Sulfonierung löslich gemachtes Aldehydkondensationsprodukt mit hydroxygruppenhaltigem aromatischem Grundkörper auch ein stabilisierendes Reduktionsmittel enthalten.

Weiter wurde gefunden, dass auch die mit den erfindungsgemässen Zusammensetzungen behandelten Substrate nicht oder nicht so schnell vergilben, wenn die erfindungsgemässen Zusammensetzungen neben einem ein gegebenenfalls durch Sulfonierung löslich gemachtes Aldehydkondensationsprodukt mit hydroxygruppenhaltigem aromatischem Grundkörper auch ein stabilisierendes Reduktionsmittel enthalten.

Durch Kombination mit weiteren schmutzabweisenden Ausrüstungsmitteln können besonders wertvolle schmutzabweisende Eigenschaften erzielt werden, und so können insbesondere in Kombination mit ölabweisenden Fluorcarbonharzen überraschend gute schmutzabweisende Ausrüstungen erzielt werden.

Geeignete kondensationsfähige aromatische Verbindungen sind z.B. Benzol- und Naphthalinderivate, die durch C₁-C₄-Alkyl- und/oder Hydroxy-, und/oder Cycloalkyl, und/oder C₁-C₄-Alkoxy-, und/oder C₁-C₄-Hydroxyalkoxy-, und/oder Aroxy-, und/oder Aralkoxy-, und/oder Carboxy-, und/oder Carbalkoxy-, und/oder Sulfonat-, und/oder Arylsulfonyl-Reste substituiert sind.

Als aromatischer Grundkörper kommen neben Phenol selber, auch seine Alkyl-(Kresole, Xylenole, Nonyl-, Octylphenol) und Aryl-Derivate (Phenylphenol), zweiwertige Phenole (Resorcin, Bisphenol A) und Naphthole in Betracht. Beispielhaft seien genannt; Phenol, Kresole, Xylenole, Butylphenol, Cyclohexylphenol, Anisol, Phenoxyethanol, Phenoxypropanol, Phenoxyessigsäure, Phenolsulfonsäure, Anisolsulfonsäure, Diphenylether, Ditolylether, Dioxydiphenylsulfon, 2,2-Bis-4-hydroxyphenyl-propan, 4-Hydroxydiphenyl-sulfon, Bis-(hydroxyethoxyphenyl)sulfon, Salicylsäure, 4-Hydroxybenzoesäure, Naphthole, Isobutylnaphthalin, Naphtholsulfonsäuren, Naphthylmethylether, Diphenylsulfonsäure, sulfoniertes Dioxydiphenylsulfon, Diphenylethersulfonsäure.

Grundsätzlich können auch bis zu 0,2 mol% Naphtalin zusätzlich eingesetzt werden.

Weiter können die Aldehydkondensationsprodukte mit hydroxygruppenhaltigem aromatischem Grundkörper auch die als Dihydroxydiphenylether bezeichneten Verbindungen, insbesondere solche, wie sie auch als Diphenoleether oder Bis-(hydroxyphenyl)-ether bezeichnet werden, verwendet werden. Vornehmlich kommen als 4,4' -, 2,2' - oder 4,2' -Dihydroxydiphenylether sowie Gemische davon, besonders technische Isomerengemische, ebenso in Betracht wie auch als Dihydroxydiphenyl bezeichnete Verbindungen, insbesondere solche, wie sie auch als Diphenol oder Bis-(hydroxyphenyl) bezeichnet werden, enthalten. Vornehmlich kommen als 4,4' -, 2,2' - oder 4,2' -Dihydroxydiphenyl sowie Gemische davon, besonders technische Isomerengemische. Weiter können die die Aldehydkondensationsprodukt mit hydroxygruppenhaltigem aromatischem Grundkörper als aromatischer Grundkörper aber auch als Dihydroxydiphenylsulfone bezeichnete Verbindungen, insbesondere solche, wie sie auch als Sulfonyldiphenole oder Bis-(hydroxyphenyl)-sulfone bezeichnet werden, enthalten. Vornehmlich kommen als 4,4' -, 2,2' - oder 4,2' - Dihydroxydiphenylsulfon (d. h. 4,4' -, 2,2' - bzw. 4,2' -Sulfonyldiphenol) sowie Gemische davon, besonders technische Isomerengemische, in Betracht.

Bevorzugt sind Dihydroxydiphenylsulfone und Phenole, insbesondere 4,4' - Dihydroxydiphenylsulfone und Phenol selber.

Bedeutendste Aldehyd-Komponente ist Formaldehyd in unterschiedlichsten Anbietungsformen (wässerige Lösungen, Paraldehyd, Formaldehyd-abspaltende Verbindungen wie z.B. Hexamethylentetramin). Andere Aldehyde oder auch Ketone können grundsätzlich auch als Carbonyl-Komponente Verwendung finden.

Aus Kondensationsreaktionen von Phenolen mit Aldehyden (Formaldehyd) resultieren unmodifizierte Phenolharze, die in Abhängigkeit von den Mengenverhältnissen der Edukte, den Reaktionsbedingungen und den eingesetzten Katalysatoren zu sogenannten Novolaken (Kondensation unter sauren Bedingungen) und Resolen (Kondensation unter basischen Bedingungen) führen.

Bevorzugt sind jene Aldehydkondensationsprodukte, die unter sauren Bedingungen hergestellt wurden.

Sollen die Aldehydkondensationsprodukt mit hydroxygruppenhaltigem aromatischem Grundkörper sulfoniert sein, kann die Sulfonierung des aromatischen Grundkörpers unter üblichen Sulfonierungsbedingungen erfolgen, vorzugsweise unter Verwendung von Oleum, 100%iger Schwefelsäure, konzentrierter Schwefelsäure oder Chlorsulfonsäure. Die Sulfonierung kann vorteilhaft im Temperaturberei von Raumtemperatur (= 20°C) bis 150°C, vorzugsweise 70 bis 135°C durchgeführt werden. Bei der - besonders bevorzugten - Sulfonierung mit 100%iger oder konzentrierter Schwefelsäure kann gewünschtenfalls unter solche Bedingungen verfahren werden, dass Reaktionswasser entzogen (z. B. gegebenenfalls unter vermindertem Druck verdampft bzw. abdestilliert) wird. Die Sulfonierung wird zweckmässig unter solchen Bedingungen durchgeführt, dass pro Molekül des aromatischen Grundkörpers durchschnittlich 0,1 bis 2, vorteilhaft 0,2 bis 1,5 Sulfogruppen eingeführt werden, vorteilhaft unter Verwendung von 0.12 bis 2,5 Mol, vorzugsweise 0.25 bis 1.75 Mol des Sulfonierungsmittels pro Mol des aromatischen Grundkörpers. Bei der bevorzugten Sulfonierung mit 100%iger oder konzentrierter Schwefelsäure (d. h. insbesondere H₂SO₄·H₂O bis H₂SO₄) wird vorteilhaft unter vermindertem Druck Reaktionswasser abdestilliert, wobei die Weiterführung der Sulfonierungsreaktion begünstigt wird und gleichzeitig nicht-sulfoniertes Edukt mitabdestilliert werden kann und das Sulfonierungsprodukt einen Sulfonierungsgrad von vornehmlich 0,15 bis 2, vorteilhaft 0.25 bis 1,5 erreicht, worunter Produkte mit durchschnittlichem Sulfonierungsgrad von 0.25 bis 1,5 besonders bevorzugt sind. Zur Herstellung von oligomeren Sulfonen der des aromatischen Grundkörper wird das Sulfonierungsprodukt zweckmässig weiterreagieren gelassen bis der gewünschte Kondensationsgrad zum oligomeren Sulfon erreicht wird. Die Kondensation zum Sulfon erfolgt vorteilhaft bei erhöhter Temperatur, vorzugsweise im Temperaturbereich von 140 bis 200°C, insbesondere 150 bis 180°C, unter vermindertem Druck, vorteilhaft unterhalb 50 mbar, besonders bevorzugt unterhalb 20 mbar. Diese Kondensation zum Sulfon wird vorteilhaft so lange weitergeführt, bis die Abnahme des Säuregehaltes des Kondensationsproduktes abklingt und der Säuregehalt im Bereich von 250 bis 450, vorzugsweise 300 bis 400 mval/100g liegt. Vorteilhaft wird die überschüssige Schwefelsäure im Reaktionsgemisch nicht abgetrennt, sondern das schwefelsaure Gemisch wird direkt zur Kondensation mit dem Formaldehyd bezw. mit der Formaldehydquelle verwendet, welche zweckmässig unter entsprechend sauren Bedingungen (Novolake) erfolgt.

Die Menge Formaldehyd bzw. Aldehyd richtet sich im allgemeinen nach der Menge des hydroxygruppenhaltigen aromatischen Grundkörpers. Vorteilhaft liegt sie im Bereich von 0,5 bis 0,8. Es kann auch von Vorteil sein, das Produkt nicht voll mit Formaldehyd auszukondensieren (z. B. wenn das Endprodukt nach Imprägnierverfahren appliziert wird), vorteilhaft liegt der Formaldehydanteil dann im Bereich von 0,25 bis 0,5, insbesondere im Bereich von 0,27 bis 0,48

Die Umsetzung des Aldehyds respektive Formaldehyds mit dem hydroxygruppenhaltigen aromatischen Grundkörper kann nach an sich bekannten Methoden erfolgen, vorteilhaft bei Temperaturen im Bereich von 50 bis 110°C, vorzugsweise 80 bis 105°C, in stark saurem Medium, beispielsweise bei pH- Werten unterhalb 3, vorzugsweise unterhalb 1. Vorteilhaft erfolgt die Umsetzung mit dem Aldehyd oder dem Formaldehyd bzw. der Formaldehydquelle in wässrig-saurem Medium, wobei die Aldehydkomponente in mit Wasser verdünnter Form zugegeben werden kann und/oder das mit Wasser bis zu einem Wassergehalt von vorteilhaft 10 bis 50 Gew.-% verdünnt werden kann.

Soll nach der Umsetzung des Aldehyds respektive Formaldehyds mit dem hydroxygruppenhaltigen aromatischen Grundkörpe sulphoniert werden, dann ist in der Regel die Zugabe einer Säure nötig. Dies kann eine starke anorganische Säure sein oder aber auch eine starke organische Säure sein. Für die Kondensation nach der Sulfonierung ist meist keine zusätzliche Säure nötig.

Das erhaltene (sulfonierte) Kondensationsprodukt enthält die Sulfonsäuregruppen in der freien Säureform und ist im wesentlichen frei von Kationen, insbesondere von mehrwertigen Metallkationen, vornehmlich Schwermetallkationen. D.h., wenn Metallkationen, insbesondere mehrwertige Metallkationen bzw. Schwermetallkationen spurenweise im Gemisch vorkommen sollten, so handelt es sich im wesentlichen um unerwünschte Nebenprodukte, wie sie durch Verwendung bestimmter Gefässe (Transport- oder Reaktionsgefässe) oder sonstiger Metallteile in der Reaktionsapparatur - z. B. Rührer, Einfülltrichter usw. - vorkommen, und liegen im allgemeinen in der Grössenordnung von einigen ppm, insbesondere < 10 ppm.

Nach erfolgter Sulfonierung können die erhaltenen Produkte durch Umsetzung mit einer geeigneten basischen Verbindung bis zum gewünschten pH versetzt werden. Das erhaltene saure Kondensationsprodukt wird, zur Herstellung von Aldehydkondensationsprodukt mit hydroxygruppenhaltigem aromatischem Grundkörper, mit einer Base versetzt, vorteilhaft bis der pH oberhalb 2 liegt, insbesondere bis der pH einer wässrigen Verdünnung mit einem Trockenstoffgehalt von 10 Gew.-% oberhalb 3 und vorzugswei unterhalb 9, besonders bevorzugt im Bereich von 3 bis 7 liegt. Als basische Verbindungen (Base) kommen vornehmlich Alkalimetallhydroxyde oder -carbonate (Alkalimetall = z. B. Lithium, Natrium oder Kalium), Ammoniak oder aliphatische Amine [z. B. Morpholin, Mono-, Di- oder Tri-(C₂₋₃-hydroxyalkyl)-amin, Mono-, Di- oder Tri-(C₁₋₂-alkyl)-amin] in Betracht.Vorzugsweise wird als basische Verbindung Natriumhydroxyd, Kaliumhydroxyd oder Ammoniak verwendet, wobei nach einer besonders bevorzugten Variante Natrium- oder Kaliumhydroxyd und Ammoniak verwendet werden, vorteilhaft in Molverhältnissen von 0,2 bis 10, vorzugsweise 0,4 bis 4 Mol KOH oder/und NaOH pro Mol Ammoniak. Die erhaltenen Produkte (die Aldehydkondensationsprodukt mit hydroxygruppenhaltigem aromatischem Grundkörper, welche gegenenenfalls sulfoniert sind) sind wasserlöslich und können, so wie sie hergestellt worden sind, gegebenenfalls nach Einstellung des Wassergehaltes bis zu einem Trockenstoffgehalt von beispielsweise 5 bis 60 Gew.-%, vorzugsweise 10 bis 50 Gew.-%, direkt gehandhabt werden oder sie können gewünschtenfalls zu trockenen Präparaten, beispielsweise durch Zerstäubungstrocknen oder Granulieren (gegebenenfalls unter Zugabe von Granulierhilfsmitteln) getrocknet werden.

Gewünschtenfalls, z. B. um die Anwendbarkeit in der Praxis zu erleichtern, können den Lösungen organische Lösungsmittel, vorteilhaft Alkohole, vornehmlich aliphatische C₂₋₈-Alkohole (insbesondere Äthanol, Isopropanol und Mono- oder Diäthylenglykol und deren C₁₋₄-Alkylmonoäther, z. B. Butylglykol) zugesetzt werden.

Als stabilisierende Reduktionsmittel kommen Endiole in Frage, die als sogenannte Reduktone stark reduzieren wirken. In Frage kommende Reduktone sind beispielsweise Hydroxymalonaldehyd, (*R*)-5-[(*S*)-1,2-Dihydroxyethyl]-3,4-dihydroxy-5*H*-furan-2-on (Ascorbinsäure, Vitamin C), (*R*)-5-((*R*)-1,2-Dihydroxyethyl)-3,4-dihydroxy-5*H*-furan-2-on (Isovitamin C, Erythorbinsäure, Isoascorbinsäure), Hydroxypropandial (Trioseredukton) oder 2,3-Dihydroxy-2-cyclopentenon (Reduktinsäure).

In einer bevorzugten Ausführungsform ist das stabilisierende Reduktionsmittel die Ascorbinsäure.

Die eingesetzten Mengen an stabilisierenden Reduktionsmitteln betragen (bezogen auf das fertige Kondensationsprodukt) 0,05 bis 20 %, vorzugsweise 0,2 bis 5 %.

Die Reduktionsmittel können dem Ausrüstungsmittel das ein gegebenenfalls durch Sulfonierung löslich gemachtes Aldehydkondensationsprodukt mit hydroxygruppenhaltigem aromatischem Grundkörper durch einfaches Mischen zugefügt werden. Die stabilisierenden Reduktionsmittel können bei Raumtemperatur durch Rühren eingetragen werden. Es wird gerührt bis eine homogene Mischung oder Lösung entsteht.

In einer weiteren Ausführungsvorm wird das Ausrüstungsmittel das ein gegebenenfalls durch Sulfonierung löslich gemachte Aldehydkondensationsprodukt mit hydroxygruppenhaltigem aromatischem Grundkörper vor dem Zumischen des Reduktionsmittels zusätzlich noch gebleicht. Nach dem Bleichen können nun die stabilisierenden Reduktionsmittel wiederum durch einfaches Zumischen zugefügt werden. Es ist grundsätzlich auch möglich, das Bleichen nach der Zugabe des stabilisierenden Reduktionsmittel durchzuführen!

Bevorzugte Bleichmittel sind reduzierend wirkende Mittel. Als reduzierend wirkende Mittel können übliche, bei chemischen Reaktionen einsetzbare Reduktionsmittel verwendet werden. Beispielsweise seien genannt: Wasserstoff, aktivierter Wasserstoff, Metallhydride wie Natriumhydrid, Natriumborhydrid oder Lithiumaluminiumhydrid, reduzierend wirkende Schwefelverbindungen wie Sulfite, mit Ausnahme von Natriumsulfit, Bisulfite, mit Ausnahme von Natriumbisulfit, Hydrosulfite, Pyrosulfite, mit Ausnahme von Natriumpyrosulfit, Dithionite, Thiosulfate, Sulfoxylate, Hydroxymethansulfinate, Sulfinate oder Thioharnstoffdioxid, reduzierend wirkende Phosphorverbindungen wie phosphorige Säure, hypophosphorige Säure oder deren Salze, sowie organische Reduktionsmittel wie Glucose, Gluconsäure oder Hydroxyaceton.

Bevorzugte Bleichmittel sind Dithionite, insbesondere Natriumdithionit.

Die eingesetzten Mengen an reduzierend wirkenden Mitteln betragen (bezogen auf das fertige Kondensationsprodukt) 0,01 bis 2 %, vorzugsweise 0,05 bis 1 %. Der Bleichvorgang findet unter Rühren während 10 Minuten bis 5 Stunden bei 20 bis 90°C statt.

Die erfindungsgemässe Mischung zeigt kein Vergilben bzw. kaum mehr ein Vergilben auch nach sehr langer Lagerzeit von z.B. drei Monaten oder gar einem Jahr. Auch die mit dem erfindungsgemässen Mittel ausgerüsteten Fasermaterialien vergilben nicht und die Farben von bedruckter Ware wird nicht beieinflusst. Auch die mit dem erfindungsgemässen Mittel gefärbten oder bedruckten Fasermaterialien vergilben nicht.

Die vor dem Vergilben geschützten schmutzabweisenden Ausrüstungsmittel, die ein gegebenenfalls durch Sulfonierung löslich gemachtes Aldehydkondensationsprodukt mit hydroxygruppenhaltigem aromatischem Grundkörper und ein stabilisierendes Reduktionsmittel enthält, dienen zur schmutzabweisenden Ausrüstung von Fasermaterialien aus natürlichem oder synthetischem Polyamid (z. B. Wolle, Seide oder synthetische Polyamide - vornehmlich Polyamid 6 oder 66), insbesondere in Form von Geweben, Gewirken und Flormaterial, vorteilhaft zur Ausrüstung von Polsterüberzugsmaterial oder Teppichen deren rechte Seite bzw. (bei Teppichen) Trittseite, aus solchen natürlichen oder/und synthetischen Polyamiden oder aus polyamidhaltigen Fasergemischen besteht.

Die erfindungsgemässen Mittel können auch nur zur schmutzabweisenden Ausrüstung verwendet werden. Indem sie auf der gut gespülten Farbware angewendet werden, werden den so gefärbten Textilien durchaus auch schmutzabweisende Eigenschaften verliehen, wobei die schmutzabweisenden Eigenschaften durch Zugabe, so gewünscht, von weiteren schmutzabweisenden Ausrüstungsmittel verstärkt werden können.

Die Ausrüstung kann nach beliebigen Methoden durchgeführt werden, wie sie an sich für die Ausrüstung mit schmutzabweisenden Ausrüstungsmitteln der Dihydroxydiphenylsulfonreihe üblich sind, insbesondere nach Ausziehverfahren oder nach Imprägnierverfahren, vorteilhaft bei pH-Werten im Bereich von 2 bis 8, vorzugsweise 2,5 bis 7, insbesondere 2,5 bis 6.

Für das Ausziehverfahren können die Temperaturen in einem breiten Bereich schwanken, z. B. im Bereich von 15 bis 130°C (gegebenenfalls unter Druck), vorteilhaft 40 bis 100°C. Die Zusätze und das Ausziehverfahren werden vorteilhaft so gesteuert, dass der pH der Ausziehflott Ende des Prozesses im Bereich von 2,5 bis 7 liegt. Nach einer besonderen Ausführungsform wird nach dem sogenannten pH-Gleitverfahren vorgegangen, d. h. der pH wird im Laufe des Ausziehverfahrens herabgesetzt, vorteilhaft im Bereich von pH 9 bis 3, insbesondere so dass bei alkalischen pH-Werten, vorteilhaft bei pH 7,5 bis 9, vorzugsweise 8 bis 9, begonnen wird und im Laufe des Verfahrens der pH auf neutrale bis saure Werte, vorteilhaft pH 7 bis 2,5, vorzugsweise 6 bis 3, herabgesetzt wird.Dies kann z. B. durch gesteuerte Zugabe von Säure (z. B. einer niedrigmolekularen aliphatischen Carbonsäure insbesondere mit 1-4 Kohlenstoffatomen, z. B. Ameisensäure, Essigsäure, Milchsäure, Oxalsäure, Zitronensäure, Apfelsäure, Bernsteinsäure oder Hydroxybuttersäure) oder/und durch Zugabe von Verbindungen die im Laufe des Verfahrens - vorzugsweise durch Hydrolyse - eine Säure erzeugen; solche säureerzeugenden Verbindungen sind z. B. verseifbare Ester, vornehmlich der oben genannten Säuren, besonders Lactone entsprechender Hydroxycarbonsäuren (z. B. Butyrolacton), oder labile Chlorverbindungen die im Laufe de Verfahrens durch Hydrolyse Salzsäure erzeugen (z. B. 2,2-Dichlorpropanol oder Monochloressigsäure) oder chlorsubstituierte Ester - insbesondere Chloressigsäureester - z. B. wie sie in der DE-OS 28 03 309 (welche dem US-Patent 4 168 142 entspricht) beschrieben sind.

Das Imprägnierverfahren kann nach beliebigen üblichen Methoden durchgeführt werden, z. B. durch Tauchen, Klotzen, Aufsprühen, Schaumauftrag, Aufrakeln oder Walzenauftrag; für das Imprägnierverfahren liegt der pH der Imprägnierflotte (mindestens am Ende des Imprägnierverfahrens, der Trocknung) vorteilhaft im Bereich von 3 bis 7, vorzugsweise 3 bis 6, wobei auch für das Imprägnierverfahren nach dem pH-Gleitverfahren vorgegangen werden kann, wenn der Imprägnierflotte entsprechende säureerzeugende Verbindungen (besonders wie oben angegeben) zugegeben werden, wofür zu Beginn des Verfahrens der pH z. B. Werte im Bereich von 6 bis 8 beträgt und am Ende des Verfahrens Werte im Bereich von 3 bis 6, vorzugsweise 3 bis 5.Nach der Imprägnierung kann die imprägnierte Ware nach verschiedenen Methoden fixiert werden, z. B. durch Verweilverfahren bei niedriger Temperatur (nach dem sogenannten Kaltverweilverfahren) oder auch in der Wärme, z. B. im Temperaturbereich von 15 bis 102°C und in geeigneten variablen Zeitspannen, z. B. im Bereich von 10 Minuten bis 48 Stunden (z. B. von mehreren Stunden bei Raumtemperatur bis zu einigen Minuten bei 102°C), oder Dämpfen z. B. bei Temperaturen im Bereich von 95 bis 140°C, vorzugsweise 100 bis 110°C, oder/und Trockenhitzebehandlung (vorzugsweise bei 130 bis 160°C). Nach Fixieren wird vorteilhaft gespült und dann getrocknet. Gegebenenfalls (z. B. je nach Substrat, Einsatzmenge und Fixierbedingungen) kann auf das Spülen verzichtet werden.

Das schmutzabweisende Mittel wird vorteilhaft in solchen Mengen eingesetzt, dass die Konzentration, berechnet als Trockensubstanz bezogen auf Trockengewicht des Substrates, 0,2 bis 10%, vorzugsweise 0,8 bis 7%, insbesondere 1,5 bis 4% beträgt. Gegebenenfalls können wasserlösliche Salze mehrwertiger, farbloser Metallkationen, z. B. Magnesiumchlorid oder -acetat, der Behandlungsflotte zugegeben werden, z. B. analog wie in der EP 267 681 A2 beschrieben.

Die oben genannten Gemische und Präparate haben Farbstoff fixierende Eigenschaften. Die Anwendung dieser Fixiermittel führt zu verbessereten Nassechteheiten der Drucke und Färbungen ohne dass die Farbe beeinflusst wird. Insbesondere tritt keine Vergilbung ein. Die erfindungsgemässen Präperationen können mit Wasser verdünnt werden. Das Wasser ist bevorzugterweise nicht über 50 °C heiss, wobei eine Wassertemperatur 40 °C ideal ist. Doch grundsätzlich kann auch mit Wasser von Raumtemperatur bis lauwarmem verdünnt werden.

Zur Nachbehandlung von gefärbter Ware wird zu einem neuen Bad von 20 bis 60°C, bevorzugt ist ein Bad mit einer Temperatur von 30 bis 50°C, 0,1 bis 10% des erfindungsgemässen Präparats zugegeben. Bevorzugterweise werden 0,5 bis 5% des erfindungsgemässen Mittels zugegeben. Nach dem Homogenisieren kann bei Bedarf noch Säure, bevorzugterweise Essigsäure oder Ameisensäure, so zugegeben werden, dass der pH 4 beträgt oder leicht darunter liegt. Üblicherweise braucht man dazu 0.5 bis 1 % der Säure. Danach wird das Bad aufgeheizt, wobei vorzugsweise nicht über 85 °C erhizt wird, oder noch bevorzugter nicht über 75°C. Die bevorzugte Badtemperatur ist 70 °C. Die Behandlung der vorgängig gut gespühlten Farbware dauert 10 bis 30 Minuten, wobei 15 bis 20 Minuten bevorzugt sind. Danach wird gut gespült.

Durchaus möglich, aber weniger bevorzugt, ist die Behandlung im abgekühlten Färbebad.

Zur Nachbehandlung von bedruckter Ware kann ähnlich vorgegangen werden.

Als Substrate eignen sich beliebige übliche, mit anionischen Farbstoffen färbbare, vornehmlich stickstoffhaltige Fasermaterialien, insbesondere Leder oder Fasermaterial aus basisch-modifizierten Polyolefinen, Polyurethanen oder natürlichen oder synthetischen Polyamiden, worunter vor allem amidgruppenhaltiges Fasermaterial, insbesondere Textilmaterial aus natürlichen und/oder synthetischen Polyamiden bevorzugt ist, vornehmlich Wolle, Seide, Polyamid 6, Polyamid 66, Polyamid 11, Polyamid 46, Qiana und Gemische davon untereinander oder mit Elastomerfasern. Die Substrate können in einer beliebigen Form vorliegen, wie sie üblicherweise zum Färben, insbesondere aus wässrigem Medium eingesetzt wird, z. B. als lose Fasern, Fäden, Filamente, Stränge, Spulen, Gewebe, Gewirke, Filze, Vliese, Samt, Teppiche, Tuftingware, sowie Halbfertig- oder Fertigware.Die Fasern können auch mechanisch und/oder thermisch behandelt sein, z. B. verstreckt oder gekräuselt und es können auch Gemische von verschiedenartigen Fasern oder auch verschieden behandelten Fasern (z wie für das Differentialfärben geeignet) eingesetzt werden.

Die genannten Substrate können nach beliebigen üblichen Färbemethoden gefärbt werden, insbesondere nach Ausziehverfahren aus wässriger Flotte oder durch Imprägnieren mit wässrigen Flotten bzw. Präparationen.

### Beispiele

### Beispiel 1

100 Teile eines sulfonierten Phenol-Formaldehyd-Kondensationsproduktes (Fixiermittel Nylofixan MF2N fl k, Clariant) wurden mit 0.1 Teilen Natriumdithionit vermischt und 1 Stunde bei 50°C gerührt.

### Beispiel 2

100 Teile eines sulfonierten Phenol-Formaldehyd-Kondensationsproduktes (Nylofixan MF2N fl k, Clariant (Schweiz) AG) wurden bei Raumtemperatur mit 0.5 Teilen Ascorbinsäure versetzt und homogen verrührt.

### Beispiel 3

100 Teile eines sulfonierten Phenol-Formaldehyd-Kondensationsproduktes (Nylofixan MF2N fl k, Clariant (Schweiz) AG) wurden zunächst mit 0.1 Teilen Natriumdithionit vermischt, 1 Stunde bei 50°C gerührt und nach Abkühlen auf Raumtemperatur mit 0.5 Teilen Ascorbinsäure versetzt und homogen verrührt.

**Tabelle 1:**

| Vergleich der Eigenfarbe des unbehandelten Fixiermittels und der Produkte aus Beispiel 1-3 | | | |
|---|---|---|---|
| | nach Herstellung | nach 3 Monaten Lagerung bei Raumtemperatur | nach 3 Monaten Lagerung bei 50°C |
| Fixiermittel (unbehandelt) | 95 | >100 | >100 |
| Beispiel 1 | 5 | 85 | >100 |
| Beispiel 2 | 91 | >100 | >100 |
| Beispiel 3 | 5 | 7 | 12 |

### Anwendungsbeispiel 1

100 Teile eines PA 6.6-Gestrickes (Nylsuisse Artikel 2044) wurden im Laborfärbeapparat (Zeltex Polycolor) mit 2000 Teilen entmineralisiertem Wasser und
a) ohne Fixiermittelzusatz
b) 3 Teilen des unbehandelten Fixiermittels
c) 3 Teilen des Präparates aus Beispiel 1
d) 3 Teilen des Präparates aus Beispiel 2
e) 3 Teilen des Präparates aus Beispiel 3

20 Minuten bei 70°C behandelt, nachdem mit Essigsäure ein pH von 4.0 bis 4.5 eingestellt wurde.
Das Gestrick wurde kalt gespült und an der Luft getrocknet.
Der Weissgrad bzw. der Yellowing Index der Substrate wurde spektrophotometrisch bestimmt (s. Tabelle 2).

### Anwendungsbeispiel 2

100 Teile eines PA 6.6-Gestrickes (Nylsuisse Artikel 2044) wurden im Laborfärbeapparat mit einer Farbstoffformulierung enthaltend 0.3 Teile C.I. Acid Yellow 49 bei einem Flottenverhältnis von 1:20 bei pH 6 (Einstellung mit Essigsäure) 45 Minuten bei 98°C gefärbt, heiss und kalt gespült und an der Luft getrocknet.
Danach wurde das gefärbte Gestrick im Laborfärbeapparat wie oben beschrieben mit 2000 Teilen entmineralisiertem Wasser und
a) ohne Fixiermittelzusatz
b) 3 Teilen des unbehandelten Fixiermittels
c) 3 Teilen des Präparates aus Beispiel 1
d) 3 Teilen des Präparates aus Beispiel 2
e) 3 Teilen des Präparates aus Beispiel 3

20 Minuten bei 70°C behandelt, nachdem mit Essigsäure ein pH von 4.0 bis 4.5 eingestellt wurde.
Die Färbung wurde kalt gespült und an der Luft getrocknet.
Die Gesamtfarbdifferenz (CMC, Cielab 1976, D65/10) wurde farbmetrisch bestimmt (s. Tabelle 2).

### Anwendungsbeispiel 3

100 Teile eines PA 6.6-Gestrickes (Nylsuisse Artikel 2044) wurden in einem Laborfärbeapparat mit einer Farbstoffformulierung enthaltend 1.7 Teile C.I. Acid Blue 72 bei einem Flottenverhältnis von 1:20 bei pH 6 (Einstellung mit Essigsäure) 45 Minuten bei 98°C gefärbt, heiss und kalt gespült und an der Luft getrocknet.
Danach wurde das gefärbte Gestrick im Laborfärbeapparat wie oben beschrieben mit 2000 Teilen entmineralisiertem Wasser und
a) ohne Fixiermittelzusatz
b) 3 Teilen des unbehandelten Fixiermittels
c) 3 Teilen des Präparates aus Beispiel 1
d) 3 Teilen des Präparates aus Beispiel 2
e) 3 Teilen des Präparates aus Beispiel 3

20 Minuten bei 60°C behandelt, nachdem mit Essigsäure ein pH von 4.0 bis 4.5 eingestellt wurde.
Die Färbung wurde kalt gespült und an der Luft getrocknet.
Die Schweissechtheit alkalisch (ISO E04) sowie die Waschechtheit 60°C (ISO 105/C06 B2S) der Färbungen wurden farbmetrisch nach ISO A04 (Anbluten des PA-Begleitgewebes) bestimmt (s. Tabelle 2).

**Tabelle 2:**

| Vergilbung, Einfluss auf die Nuance und Fixierwirkung des unbehandelten Fixiermittels und der Produkte aus Beispiel 1-3 | | | | | |
|---|---|---|---|---|---|
| | Anwendungsbeispiel 1 | | Anwendungsbeispiel 2 | Anwendungsbeispiel 3 | |
| | Weissgrad CIE | Yellowing Index | CMC | Schweiss ISO E04 | Wäsche B2S |
| a | 80.1 | 3.9 | - | 2.0 | 2.5 |
| b | 43.6 | 18.9 | 2.4 | 4.6 | 4.0 |
| c | 44.7 | 17.4 | 1.8 | 4.5 | 3.9 |
| d | 57.5 | 12.6 | 2.2 | 4.5 | 3.7 |
| e | 74.8 | 5.5 | 0.2 | 4.5 | 3.9 |

## Patentansprüche

1. Zusammensetzung enthaltend ein gegebenenfalls durch Sulfonierung löslich gemachtes Aldehydkondensationsprodukt mit hydroxygruppenhaltigem aromatischem Grundkörper enthaltend ein Reduktionsmittel.

2. Zusammensetzung gemäss Anspruch 1 **dadurch gekennzeichnet, dass** das Reduktionsmittel ein Endiol ist.

3. Zusammensetzung gemäss Anspruch 2 **dadurch gekennzeichnet, dass** das Endiol Hydroxymalonaldehyd oder Ascorbinsäure oder Isoascorbinsäure oder Hydroxypropandial 2,3-Dihydroxy-2-cyclopentenon ist.

4. Zusammensetzung gemäss Anspruch 3 **dadurch gekennzeichnet, dass** das Endiol Ascorbinsäure ist.

5. Zusammensetzung gemäss Anspruch 2 **dadurch gekennzeichnet, dass** das Aldehydkondensationsprodukt mit einem Reduktionsmittel gebleicht wurde.

6. Zusammensetzung gemäss Anspruch 5 **dadurch gekennzeichnet, dass** das Aldehydkondensationsprodukt mit einem Dithionit gebleicht wurde.

7. Verfahren zum Herstellen einer nicht vergilbenden Zusammensetzung enthaltend ein Aldehydkondensationsprodukt **dadurch gekennzeichnet, dass** zu einem Aldehydkondensationsprodukt mit hydroxygruppenhaltigem aromatischem Grundkörper ein stabilisierendes Reduktionsmittel zugegeben wird.

8. Verfahren gemäss Anspruch 7, **dadurch gekennzeichnet, dass** vor oder nach der Zugabe des stabilisierenden Reduktionsmittels ein weiteres Reduktionsmittel zugegeben wird und das Aldehydkondensationsprodukt zusammen mit dem weiteren Reduktionsmittel gerührt wird.

9. Verfahren gemäss Anspruch 7 oder 8, **dadurch gekennzeichnet, dass** das stabilisierende Reduktionsmittel ein Endiol und das weitere Reduktionsmittel ein Dithionit ist.

10. Verwendung einer Zusammensetzung gemäss den Ansprüchen 1 bis 6 oder einer Zusammensetzung herstellbar durch das Verfahren gemäss den Ansprüchen 7 bis 9 zum Fixieren und/oder schmutzabweisenden Ausrüsten von natürlichen oder synthetischen Polyamidfasermaterialien.

11. Fasermaterialien hergestellt unter Verwendung von oder behandelt mit einem Aldehydkondensationsprodukts gemäss den Ansprüchen 1 bis 6 oder eines Aldehydkondensationsprodukts herstellbar durch das Verfahren gemäss den Ansprüchen 7 bis 9
